# EUROPEAN PATENT APPLICATION

(11) **EP 4 645 973 A1**
(43) Date of publication of application: **05.11.2025**
(21) Application number: 22969756.0
(22) Date of filing: 30.12.2022
(51) Int. Cl.: H04W 64/00

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Penza, Giancarlo
(86) International application number: PCT/CN2022/143872
(87) International publication number: WO 2024/138611

(57) **Abstract**

Provided are a communication method and a communication device. The communication method comprises: a first device acquires first auxiliary information, the first auxiliary information being used to indicate a feature of a first data set. In an embodiment of the present application, the first device can acquire the first auxiliary information, so that the first device can learn about the feature of the first data set according to the first auxiliary information, which thus helps ensure correct and efficient utilization of the first data set.

## Description

### TECHNICAL FIELD

The disclosure relates to the field of communication technology, and more specifically, to a communication method and a communication device.

### BACKGROUND

With development of the communication technology, a wireless communication solution based on Machine Learning (ML) / Artificial Intelligence (AI) is increasingly used. In such wireless communication solution, how to correctly and efficiently utilize the acquired wireless communication dataset is a problem that needs to be solved.

### SUMMARY

The disclosure provides a communication method and a communication device. Various aspects of the disclosure are introduced in the following.

In a first aspect, a communication method is provided. The method includes the following operation. A first device acquires first assistance information, and the first assistance information is used to indicate a characteristic of a first dataset.

In a second aspect, a communication method is provided. The method includes the following operation. A second device receives first assistance information from a first device, and the first assistance information is used to indicate a characteristic of a first dataset.

In a third aspect, a communication device is provided, and the communication device is a first device. The first device includes an acquisition module. The acquisition module is configured to acquire first assistance information, and the first assistance information is used to indicate a characteristic of a first dataset.

In a fourth aspect, a communication device is provided, and the communication device is a second device. The second device includes a receiving module. The receiving module is configured to receive first assistance information from a first device, and the first assistance information is used to indicate a characteristic of a first dataset.

In a fifth aspect, a communication device is provided, and the communication device includes a processor, a memory and a communication interface. The memory is configured to store one or more computer programs, and the processor is configured to call the computer program from the memory to enable the communication device to perform part or all of the operations of the method in the first aspect or the second aspect.

In a sixth aspect, an embodiment of the disclosure provides a communication system, and the system includes the first device and/or the second device described above. In another possible design, the system may further include another device that interacts with the first device or the second device in a solution provided by an embodiment of the disclosure.

In a seventh aspect, an embodiment of the disclosure provides a computer-readable storage medium having stored thereon a computer program. The computer program enables a communication device to perform part or all of the operations of the methods in the above various aspects.

In an eighth aspect, an embodiment of the disclosure provides a computer program product. The computer program product includes a non-transitory computer-readable storage medium having stored thereon a computer program, and the computer program may be operated to enable a communication device to perform part or all of the operations of the methods in the above various aspects. In some implementations, the computer program product may be a software installation package.

In a ninth aspect, an embodiment of the disclosure provides a chip including a memory and a processor. The processor may call and run a computer program from the memory to implement part or all of the operations described in the methods in the above various aspects.

In the embodiments of the disclosure, the first device may acquire the first assistance information, such that the first device may understand the characteristic of the first dataset according to the first assistance information, which is thereby conducive to ensuring correct and efficient utilization of the first dataset.

### BRIEF DESCRIPTION OF THE DRAWINGS

FIG. 1 is an exemplary diagram of a system architecture of a wireless communication system to which an embodiment of the disclosure may be applied.
FIG. 2 is a schematic diagram of an AI-based CSI encoding and decoding solution.
FIG. 3 is a schematic diagram of an AI-based channel estimation solution.
FIG. 4 is a schematic diagram of an AI-based positioning solution.
FIG. 5 is a schematic diagram of an AI-based beam management solution.
FIG. 6 is a schematic flowchart of a communication method provided by an embodiment of the disclosure.
FIG. 7 is a schematic flowchart of a communication method provided by another embodiment of the disclosure.
FIG. 8 is a schematic flowchart of a communication method provided by yet another embodiment of the disclosure.
FIG. 9 is a schematic flowchart of a communication method provided by yet another embodiment of the disclosure.
FIG. 10 is a schematic diagram of a structure of a communication device provided by an embodiment of the disclosure.
FIG. 11 is a schematic diagram of a structure of a communication device provided by another embodiment of the disclosure.
FIG. 12 is a schematic diagram of a structure of a communication apparatus provided by an embodiment of the disclosure.

### DETAILED DESCRIPTION

### Communication System Architecture

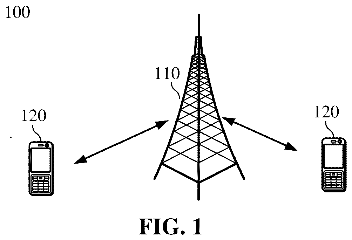

FIG. 1 is an exemplary diagram of a system architecture of a wireless communication system 100 to which an embodiment of the disclosure may be applied. The wireless communication system 100 may include a network device 110 and a terminal device 120. The network device 110 may be a device that communicates with the terminal device 120. The network device 110 may provide communication coverage for a specific geographic region and may communicate with a terminal device 120 located within the coverage region.

FIG. 1 exemplarily illustrates a network device and two terminal devices. Optionally, the wireless communication system 100 may include multiple network devices, and other numbers of terminal devices may be included within the coverage area of each network device, which is not limited by the embodiments of the disclosure.

Optionally, the wireless communication system 100 may further include other network entities, such as a network controller, a mobile management entity, or the like, which is not limited by the embodiments of the disclosure.

It is to be understood that the technical solution of the embodiments of the disclosure may be applied to various communication systems, for example, a 5th Generation (5G) system or a New Radio (NR), a Long Term Evolution (LTE) system, an LTE Frequency Division Duplex (FDD) system, an LTE Time Division Duplex (TDD), or the like. The technical solution provided by the disclosure may further be applied to a future communication system, such as a 6th generation mobile communication system, a satellite communication system, or the like.

The technical solution of the embodiments of the disclosure may be applied to a Carrier Aggregation (CA) scenario, a Dual Connectivity (DC) scenario, or a Standalone (SA) network deployment scenario (e.g. a scenario in which the NR is independently deployed).

The terminal device in the embodiments of the disclosure may also be referred to as User Equipment (UE), an access terminal, a user unit, a user station, a Mobile Station (MS), a Mobile Terminal (MT), a remote station, a remote terminal, a mobile device, a user terminal, a terminal, a wireless communication device, a user agent, or a user apparatus. The terminal device in the embodiments of the disclosure may refer to a device that provides voice and/or data connectivity to users, and may be used to connect people, objects and machines, such as a handheld device or an in-vehicle device with a wireless connection function, or the like. The terminal device in the embodiments of the disclosure may be a Mobile Phone, a tablet computer (Pad), a laptop computer, a handheld computer, a Mobile Internet Device (MID), a wearable device, a Virtual Reality (VR) device, an Augmented Reality (AR) device, a wireless terminal in the industrial control, a wireless terminal in the self driving, a wireless terminal in the remote medical surgery, a wireless terminal in the smart grid, a wireless terminal in the transportation safety, a wireless terminal in the smart city, a wireless terminal in the smart home, or the like. Optionally, the UE may be used as a base station. For example, the UE may act as a scheduling entity, which provides sidelink signals between UE in V2X or D2D. For example, a cellular phone and a vehicle communicate with each other using sidelink signals. A cellular phone communicates with a smart home device without relaying communication signals through a base station.

The network device in the embodiments of the disclosure may be a device for communicating with the terminal device. In some embodiments, the network device may refer to an access network device or a wireless access network device, for example, the network device may be a base station. The network device in the embodiments of the disclosure may refer to a Radio Access Network (RAN) node (or device) that connects the terminal device to the wireless network. The base station may broadly cover the following various names or be interchanged with the following names, such as a NodeB, an evolved NodeB (eNB), a next generation NodeB (gNB), a relay station, an access point, a Transmitting and Receiving Point (TRP), a Transmitting Point (TP), a master station MeNB, a secondary station SeNB, a Multi-Standard Radio (MSR) node, a home base station, a network controller, an access node, a wireless node, an Access Point (AP), a transmission node, a sending and receiving node, a Base Band Unit (BBU), a Remote Radio Unit (RRU), an Active Antenna Unit (AAU), a Remote Radio Head (RRH), a Central Unit (CU), a Distributed Unit (DU), a positioning node, or the like. The base station may be a macro base station, a micro base station, a relay node, a donor node or similar, or a combination thereof. The base station may further refer to a communication module, a modem or a chip used to be disposed in the aforementioned devices or apparatuses. The base station may further be a mobile switching center, a device that undertakes functions of the base station in device-to-device (D2D), vehicle-to-everything (V2X) or machine-to-machine (M2M) communication, a network-side device in a 6G network, a device that undertakes functions of the base station in a future communication system, or the like. The base station may support networks with the same or different access technologies. The embodiments of the disclosure do not limit the specific technology and specific device form adopted by the network device.

The base station may be fixed or mobile. For example, a helicopter or a drone may be configured to act as a mobile base station, and one or more cells may move according to the position of the mobile base station. In other examples, a helicopter or a drone may be configured to act as a device that communicates with another base station.

In some deployments, the network device in the embodiments of the disclosure may refer to a CU or a DU, or the network device may include a CU and a DU. The gNB may further include an AAU.

In some embodiments, the network device may refer to a core network device. For example, the network device may refer to a network element in a core network, such as an Access and Mobility Management Function (AMF) network element, a Session Management Function (SMF) network element, a Policy Control Function (PCF) network element, or the like.

The network device and the terminal device may be deployed on land, including indoors or outdoors, handheld or in-vehicle; or on water surfaces; or on aircraft, balloons or satellites in the air. The embodiments of the disclosure do not limit the scenario in which the network device and the terminal device are located.

It is to be understood that all or part of the functions of the communication device in the disclosure may also be implemented by software functions running on hardware, or by virtualized functions instantiated on a platform (e.g., a cloud platform).

### ML/AI-Based Wireless Communication Solution

Currently, application of the ML/AI-based wireless communication solution in the communication system is increasing.

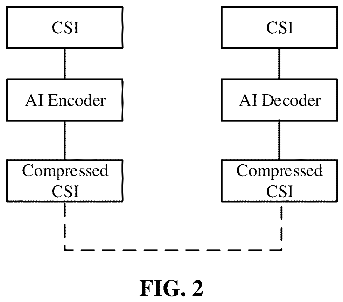

As an example, the wireless communication system may rely on AI to solve Channel State Information (CSI) feedback problems. Referring to FIG. 2, an AI encoder (or referred to as a CSI compression model) and an AI decoder (or referred to as a CSI recovery model) may be introduced into the wireless communication system to implement AI-based CSI information compression and feedback.

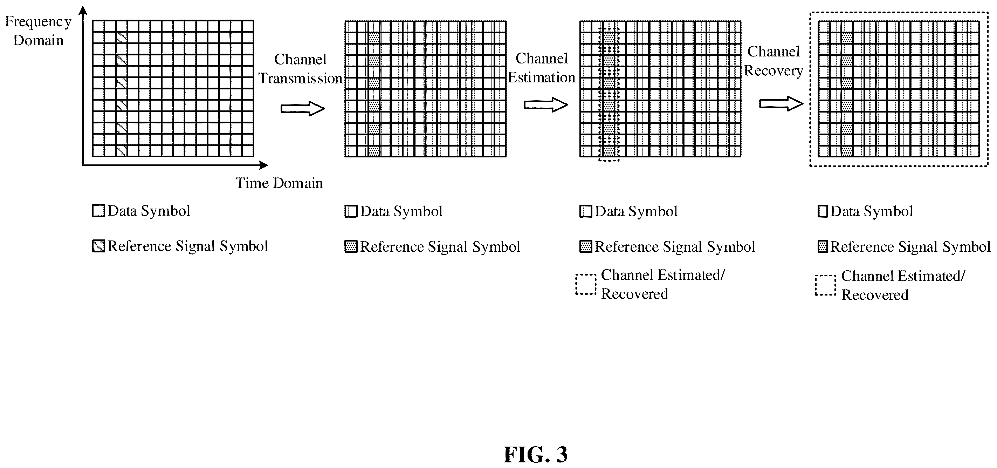

As another example, the wireless communication system may rely on AI to solve channel estimation problems. Referring to FIG. 3, an AI channel estimator may be introduced into the wireless communication system to implement high-performance estimation of a given channel.

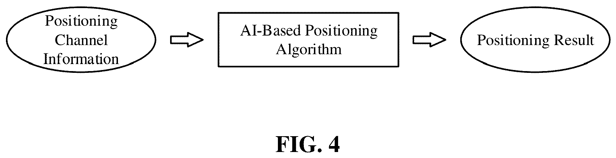

As yet another example, the wireless communication system may rely on AI to solve positioning problems. Referring to FIG. 4, an AI-based positioning algorithm may be introduced into the wireless communication system. By inputting positioning channel information into the AI-based positioning algorithm, high-precision positioning results may be acquired.

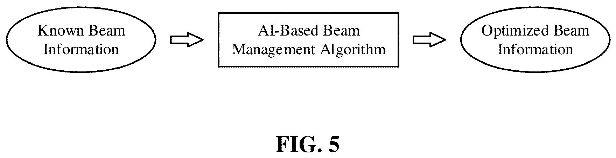

As yet another example, the wireless communication system may rely on AI to solve beam management problems. Referring to FIG. 5, an AI-based beam management algorithm may be introduced into the wireless communication system. In combination with known beam information, preferred or more refined beam information may be acquired, or prediction results for beam information at future moments may be acquired.

In the ML/AI-based wireless communication solution, the ML/AI-based wireless communication solution is highly associated with a wireless communication dataset (e.g., a wireless AI dataset, which hereinafter may be abbreviated as a dataset). For example, the ML/AI-based wireless communication solution is highly associated with a specific task dataset. The degree of association between the ML/AI-based wireless communication solution and the dataset is mainly reflected in the following aspects. In a first aspect, the construction process of the ML/AI-based wireless communication solution/model requires the dataset, for example, the dataset is required for training an ML/AI model. In a second aspect, the management process of the ML/AI-based wireless communication solution/model requires the dataset, for example, the dataset is required for performance evaluation, solution selection, online update, or the like, of the ML/AI-based wireless communication solution/model. In a third aspect, the construction process of the scenario and application matching of the ML/AI-based wireless communication solution/model requires the dataset, for example, a dataset that adapts to the scenario needs to be constructed, or the dataset is required when model generalization problems are evaluated and solved.

As can be seen from the above description, the dataset is very important for the ML/AI-based wireless communication solution. In other words, the wireless communication dataset is very important in many tasks. For example, in the construction, use, and management process of the ML/AI-based wireless communication solution, it is a key factor for smooth progress of the above tasks to acquire an accurate, reliable and information-comprehensive wireless communication dataset.

Currently, when the ML/AI-based wireless communication solution is used, it is generally assumed that the ML/AI model has already been trained in advance and is ready for use. In such case, demand for the dataset is relatively low. However, it is very difficult in engineering and implementation to pre-train a complete ML/AI model that may adapt to different problems/scenarios/environments. It is very difficult to generate an ML/AI-based wireless communication solution to solve all the problems, and it is also difficult to prepare various solutions in advance for various wireless ML/AI problems. Therefore, for the ML/AI-based wireless communication solution, it is particularly important to construct, deploy and optimize the ML/AI-based wireless communication solution on demand.

To ensure that the ML/AI-based wireless communication solution may be constructed, deployed and optimized on demand, it is necessary to implement on-demand acquisition of the wireless communication dataset. For example, a dataset for a specific ML/AI problem is effectively generated in an online or offline manner, to support construction, deployment and optimization of the ML/AI-based wireless communication solution for the specific problem.

However, even when the dataset for the ML/AI-based wireless communication solution may be acquired, in some cases, the dataset still cannot be used correctly and efficiently. For example, after a data collection node collects the dataset within several base stations, there is still a problem that a refined model based on the base station level cannot be constructed. In another example, after the data collection node collects the dataset, it is found that the ML/AI-based wireless communication solution cannot be constructed, selected or updated according to the location, time, or other characteristics of the dataset.

To solve the above problems, the inventor has found that the reason why the dataset still cannot be used correctly and efficiently after being acquired is that the dataset acquired in the above manner is only simple data collection, which lacks illustration and recording of key characteristics of the dataset and during the data acquisition process. For example, after the data collection node collects the dataset within from several base stations, a refined model based on the base station level cannot be constructed because additional information associated with the base station is not recorded when the dataset is collected. In another example, after the data collection node collects the dataset, it is found that the ML/AI-based wireless communication solution cannot be constructed, selected or updated according to the location, time, or other characteristics of the dataset because location information, time information, or the like associated with data collection are not recorded when the dataset is collected.

Therefore, the embodiments of the disclosure provide a communication method and a communication device that may construct assistance information of the wireless communication dataset, so as to ensure that the wireless communication dataset may be correctly and efficiently used in the ML/AI-based wireless communication solution. The embodiments of the disclosure are introduced in the following in combination with the drawings.

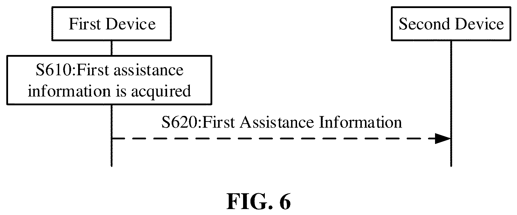

FIG. 6 is a schematic flowchart of a communication method provided by an embodiment of the disclosure. The method shown in FIG. 6 is described from the perspective of interaction between a first device and a second device. Before the method in FIG. 6 is introduced, the first device and the second device are first introduced.

The first device and the second device may be two communication devices in a wireless communication system. The first device may be a collector of a wireless communication dataset (i.e., the first dataset in the following), for example, the first device may be a data collection node. In some embodiments, after acquiring (e.g., collecting or receiving) the wireless communication dataset, the first device may send the wireless communication dataset to the second device. Therefore, the second device may be a receiver of the wireless communication dataset, and in such case, the first device may be a sender of the wireless communication dataset.

In some implementations, the first device may be a terminal device, for example, the terminal device 120 shown in FIG. 1. In such case, the second device may be a network device, for example, the network device 110 (an access network device or a core network device) shown in FIG. 1. Alternatively, the second device may be a terminal device, for example, a terminal device different from the first device (another terminal device). Alternatively, the second device may be a third-party server, for example, a third-party organization for providing model construction/management services.

Correspondingly, when the first device is a terminal device and the second device is a network device, the first device may send assistance information of the wireless communication dataset (i.e., the first assistance information in the following) to the second device in one or more of the following manners: Uplink Control Information (UCI), a Radio Resource Control (RRC) signaling, an uplink data channel, an AI/ML service-specific transmission channel, an uplink Non-Access Stratum (NAS) message, or the like. The uplink data channel mentioned above may include, for example, a Physical Uplink Shared Channel (PUSCH), a Physical Uplink Control Channel (PUCCH), or the like. When both of the first device and the second terminal device are terminal devices, the first device may send the assistance information of the wireless communication dataset to the second device in one or more of the following manners: sidelink communication, a sidelink data channel, an RRC signaling, an RRC reconfiguration message, an AI/ML service-specific transmission channel, or the like. The sidelink data channel mentioned above may include, for example, a Physical Sidelink Shared Channel (PSSCH), a Physical Sidelink Control Channel (PSCCH), or the like. When the first device is a terminal device and the second device is a third-party server, the first device may send the assistance information of the wireless communication dataset to the second device, for example, through an AI/ML service-specific transmission channel.

In some implementations, the first device may be a network device (an access network device or a core network device), for example, the network device 110 shown in FIG. 1. In such case, the second device may be a terminal device, for example, the terminal device 120 shown in FIG. 1. Alternatively, the second device may be a network device, for example, a network device different from the first device (another network device). Alternatively, the second device may be a third-party server, for example, a third-party organization for providing model construction/management services.

Correspondingly, when the first device is a network device and the second device is a terminal device, the first device may send the assistance information of the wireless communication dataset (i.e., the first assistance information in the following) to the second device in one or more of the following manners: Downlink Control Information (DCI), a Medium Access Control Control Element (MAC CE) message, an RRC signaling, an RRC reconfiguration message, a downlink data channel, an AI/ML service-specific transmission channel, a downlink NAS message, or the like. The downlink data channel mentioned above may include, for example, a Physical Downlink Shared Channel (PDSCH) or a Physical Downlink Control Channel (PDCCH). When both of the first device and the second device are network devices, the first device may send the assistance information of the wireless communication dataset to the second device in one or more of the following manners: an interface between network devices, an AI/ML service-specific transmission channel, or the like. Exemplarily, when both of the first device and the second device are access network devices (e.g., base stations), transmission may be performed through an interface between base stations (such as an Xn interface). Alternatively, when the first device is an access network device and the second device is an AMF network element, transmission may be performed through an N2 interface. When the first device is a network device and the second device is a third-party server, the first device may send the assistance information of the wireless communication dataset to the second device, for example, through an AI/ML service-specific transmission channel.

In some implementations, the first device may be a third-party server, for example, a third-party organization for providing model construction/management services. In such case, the second device may be a terminal device, for example, the terminal device 120 shown in FIG. 1. Alternatively, the second device may be a network device, for example, the network device 110 shown in FIG. 1. Alternatively, the second device may be a third-party server, for example, a third-party server different from the first device (another server).

Correspondingly, when the first device is a third-party server, the first device may send the assistance information of the wireless communication dataset (i.e., the first assistance information in the following) to the second device, for example, through an AI/ML service-specific transmission channel.

The method shown in FIG. 6 is introduced in the following. The method shown in FIG. 6 may include operation S610.

In operation S610, a first device acquires first assistance information, and the first assistance information is used to indicate a characteristic of a first dataset.

In some embodiments, the first dataset may be used to train/construct/update a wireless communication model, for example, to train/construct/update an ML/AI-based wireless communication model.

In some embodiments, the wireless communication model may be a model deployed on the first device, or a model to be deployed by the first device. In some embodiments, the wireless communication model may be a model deployed on the second device, or a model to be deployed by the second device. In such case, the first device may be a data collection node that sends the collected first dataset to the second device.

The embodiments of the disclosure do not specifically limit the type of the above wireless communication model. Exemplarily, the above wireless communication model may be an ML/AI-based wireless communication model and may be applied in a wireless communication system. As a specific example, the wireless communication model may be a CSI decompression model and may be used to solve CSI feedback problems. As another example, the wireless communication model may be a channel estimation model and may be used to solve channel estimation problems. As yet another example, the wireless communication model may be an AI-based positioning model and may be used to solve positioning problems. As yet another example, the wireless communication model may be an AI-based beam management model and may be used to solve beam management problems.

In some embodiments, the above first assistance information and the first dataset may be used together for training/constructing/updating the wireless communication model.

Continuing to refer to FIG. 6, in some embodiments, after the operation S610, the method may further include operation S620. In operation S620, the first device sends the first assistance information to the second device.

In the embodiments of the disclosure, the first assistance information is associated with the first dataset and may be used to indicate the characteristic of the first dataset. In other words, the first assistance information may be used to indicate related information of the first dataset, that is, the first assistance information may provide information beyond the first dataset itself, such that the characteristic or related information of the first dataset may be understood according to the first assistance information, which is thereby conducive to ensuring correct and efficient utilization of the first dataset.

In the embodiments of the disclosure, the provision of the first assistance information is conducive to the utilization of the first dataset. When a data user (e.g., the first device or the second device) uses the first dataset, the first dataset and the first assistance information corresponding to the first dataset may be used together to train/construct/update the wireless communication model. On one hand, it is conducive to constructing a wireless communication model that is adapted to the scenario/configuration/region, and on the other hand, it also helps the data user have clearer data characteristic information to effectively complete tasks such as model migration, update, and optimization.

The content included in the first assistance information and the characteristic of the first dataset indicated by the first assistance information are introduced in detail in the following.

In some embodiments, the first assistance information may be used to indicate one or more of the following characteristics of the first dataset: a spatial characteristic of the first dataset, a characteristic of a node associated with the first dataset, a type characteristic of the first dataset, an environment characteristic of the first dataset, a transmission-related characteristic of the first dataset, or a temporal characteristic of the first dataset.

In some embodiments, the spatial characteristic of the first dataset may include, for example, a characteristic related to the spatial location of the first dataset, such as a characteristic related to the acquisition region or acquisition position of the first dataset, a characteristic related to the cell or beam of the first dataset, or the like.

Correspondingly, the first assistance information used to indicate the spatial characteristic of the first dataset may include one or more of: acquisition region/position information of the first dataset, cell-related information of the first dataset, or beam-related information of the first dataset.

Taking a case in which the first assistance information includes the acquisition region/position information of the first dataset as an example, the acquisition region/position information of the first dataset may be associated with the first dataset to indicate the spatial characteristic of the first dataset. For example, when acquiring the first dataset, the first device may associate data acquired in different regions with the above acquisition region according to a region division manner (or a region division solution) of the data to be collected.

As an example, the region to be served may be divided into N different regions, and region i (i≤N) may be taken as assistance information of the dataset collected within region i. That is to say, if the dataset collected within region i is the first dataset, region i may be taken as the first assistance information.

In some embodiments, before or after acquiring the first dataset, the first device further needs to determine the region division manner associated with the acquisition region of the first dataset, so as to determine the acquisition region/position of the first dataset according to the region division manner.

As an implementation, the above region division manner may be predefined by a protocol. For example, the protocol may regulate in advance that the region to be served is divided into N different regions. The first device may determine the acquisition region information (e.g., a region ID) corresponding to the first dataset based on the division manner of different regions, to generate the acquisition region/position information of the first dataset as the first assistance information.

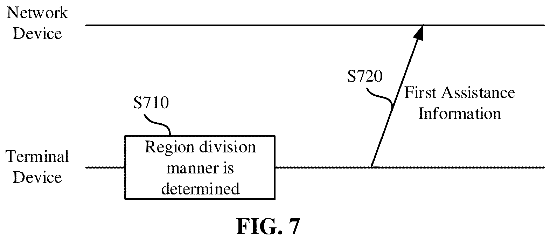

In some embodiments, after determining the region division manner based on the manner predefined by the protocol, the first device may send the obtained first assistance information to the second device. Assuming that the first device is a terminal device and the second device is a network device, referring to FIG. 7, in operation S710, the terminal device may determine the region division manner. The region division manner may be used by the terminal device to determine the acquisition region information corresponding to the first dataset. After determining the region division manner, the terminal device may proceed to operation S720, that is, the terminal device sends the first assistance information to the network device. The first assistance information may include, for example, the acquisition region/position information of the first dataset.

As another implementation, the above region division manner may be indicated to the first device by the network device. The network device may divide the region to be served into N different regions in advance, and indicate the region division manner to the first device. In this way, the first device may determine the acquisition region information corresponding to the first dataset according to the region division manner indicated by the network device, to generate the acquisition region/position information of the first dataset as the first assistance information.

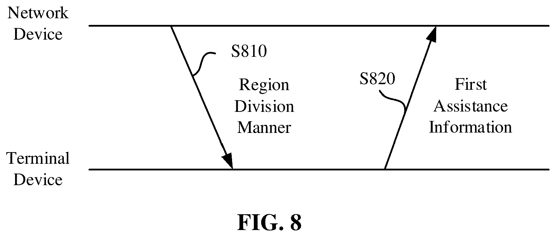

In some embodiments, after determining the region division manner based on the manner indicated by the network device, the first device may send the obtained first assistance information to the second device. Assuming that the first device is a terminal device and the second device is a network device, referring to FIG. 8, in operation S810, the network device indicates the region division manner to the terminal device. The region division manner may be used by the terminal device to determine the acquisition region information corresponding to the first dataset. After determining the region division manner, the terminal device may proceed to operation S820, that is, the terminal device sends the first assistance information to the network device. The first assistance information may include, for example, the acquisition region/position information of the first dataset.

As yet another implementation, the above region division manner may be divided (determined) by the first device itself. The first device may divide the region to be served into N different regions in advance, and determine the acquisition region information corresponding to the first dataset based on the region division manner, to generate the acquisition region/position information of the first dataset as the first assistance information.

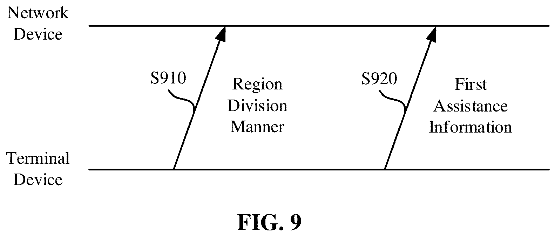

In some embodiments, after determining the region division manner, the first device may further indicate the region division manner to the second device, such that the second device may determine which region/position is represented by the acquisition region/position information of the first dataset in the first assistance information according to the region division manner. In some embodiments, in addition to sending the region division manner to the second device, the terminal device may further send the first assistance information to the second device. The embodiments of the disclosure do not limit the order in which the first device sends the region division manner and the first assistance information to the second device. For example, they may be sent simultaneously, or the region division manner may be sent firstly, or the first assistance information may be sent firstly. Assuming that the first device is a terminal device and the second device is a network device, referring to FIG. 9, in operation S910, the terminal device indicates the region division manner to the network device. The region division manner may be used by the network device to determine the acquisition region information corresponding to the first dataset. In operation S920, the terminal device sends the first assistance information to the network device. The first assistance information may include, for example, the acquisition region/position information of the first dataset.

The embodiments of the disclosure do not limit the division criteria for dividing the region to be served into N different regions. Exemplarily, the division may be performed based on absolute position coordinates or relative position coordinates, or based on boundary coordinates, or based on region division rules, or the like.

In addition to the above listed manner of determining the acquisition region/position information of the first dataset through the region division manner, the acquisition region/position information of the first dataset may also be determined in other manners, which is not limited by the embodiments of the disclosure. Exemplarily, the first device may determine the acquisition region/position information of the first dataset through Global Positioning System (GPS) information.

Taking a case in which the first assistance information includes the cell-related information of the first dataset as an example, the cell-related information of the first dataset may be associated with the first dataset to indicate the spatial characteristic of the first dataset. For example, when acquiring the first dataset, the first device may associate the first dataset acquired within a specific cell with the specific cell, or may indicate that the first dataset originates from the specific cell. For example, when there are X different cells within the data collection region, the first device may indicate that the first dataset is associated with cell i (i≤X) or originates from cell i.

Taking a case in which the first assistance information includes the beam-related information of the first dataset as an example, the beam-related information of the first dataset may be associated with the first dataset to indicate the spatial characteristic of the first dataset. For example, when acquiring the first dataset, the first device may associate the first dataset acquired within a specific beam with the specific beam, or may indicate that the first dataset originates from that specific beam. For example, when there are Y different beams within the data collection region, the first device may indicate that the first dataset is associated with beam i (i≤Y) or originates from beam i.

The node associated with the first dataset may include, for example, a data collection node corresponding to the first dataset, a collected target node corresponding to the first dataset, a used node of the first dataset, or the like. The characteristic of the node associated with the first dataset may include, for example, a speed-related characteristic, an identity-related characteristic, a configuration-related characteristic, a location-related characteristic, or the like, of the node.

Correspondingly, the first assistance information used to indicate the characteristic of the node associated with the first dataset may include one or more of: speed information of the node associated with the first dataset, identity information of the node associated with the first dataset, configuration information of the node associated with the first dataset, location information of the node associated with the first dataset, or the like.

Taking a case in which the first assistance information includes the speed information of the node associated with the first dataset as an example, the speed information of the node associated with the first dataset may be associated with the first dataset to indicate the characteristic of the node associated with the first dataset. For example, the first device may acquire speed information of the data collection node corresponding to the first dataset, speed information of the collected target node corresponding to the first dataset, or the like.

In some embodiments, the speed information of the node associated with the first dataset may refer to speed level information of the node associated with the first dataset. For example, the node associated with the first dataset is in one of a stationary state, a low-speed motion state, a medium-speed motion state, a high-speed motion state, or an ultra-high-speed motion state.

In some embodiments, the speed information of the node associated with the first dataset may refer to speed magnitude information of the node associated with the first dataset. For example, the motion speed of the node associated with the first dataset is Z km/h.

Taking a case in which the first assistance information includes the identity information of the node associated with the first dataset as an example, the identity information of the node associated with the first dataset may be associated with the first dataset to indicate the characteristic of the node associated with the first dataset. For example, the first device may acquire identity information of the data collection node corresponding to the first dataset, identity information of the collected target node corresponding to the first dataset, identity information of a training/used/management node of the model corresponding to the first dataset, or the like.

In some embodiments, the identity information of the node associated with the first dataset may be indicated by a node ID associated with the first dataset, such as an ID of the terminal device, an ID of the base station, an ID of the core network element, or the like.

Taking a case in which the first assistance information includes the configuration information of the node associated with the first dataset as an example, the configuration information of the node associated with the first dataset may be associated with the first dataset to indicate the characteristic of the node associated with the first dataset. For example, the first device may acquire configuration information of the data collection node corresponding to the first dataset, configuration information of the training/used/management node of the model corresponding to the first dataset, or the like. For example, the first device may acquire configuration information of the terminal device, configuration information of the base station, or the like.

Taking a case in which the first assistance information includes the location information of the node associated with the first dataset as an example, the location information of the node associated with the first dataset may be associated with the first dataset to indicate the characteristic of the node associated with the first dataset. For example, the first device may acquire location information of the data collection node corresponding to the first dataset, location information of the training/used/management node of the model corresponding to the first dataset, or the like.

It is to be noted that the location information of the node associated with the first dataset may include, for example, pose information, direction information, or the like, of the node associated with the first dataset. For example, pose information and direction information of the terminal device, direction information of the base station, or the like.

The type characteristic of the first dataset may be used to indicate the data type of the first dataset, such as the data type included in the first dataset, the type of input data of the model corresponding to the first dataset, the type of output data of the model corresponding to the first dataset, or the like.

Correspondingly, the first assistance information used to indicate the type characteristic of the first dataset may include type information of the first dataset. That is to say, the first device may associate the type information of the first dataset with the first dataset to indicate the type characteristic of the first dataset.

The embodiments of the disclosure do not limit the data type of the first dataset. For example, the type information of the first dataset may be used to indicate that the data type of the first dataset is one or more of the following data types: channel information H, channel pre-coding information W, reference signal information RS, or measurement information for a specific cell/beam. As an example, the first dataset may include the channel information H, the pre-coding information W, the reference signal information RS, cell/beam measurement results, or the like. The cell/beam measurement results may be indicated by one or more of the following information: Reference Signal Received Power (RSRP), a Reference Signal Received Quality (RSRQ), a Received Signal Strength Indicator (RSSI), or the like.

In some embodiments, the type information of the first dataset may further be used to indicate data format information of the above different types of data information, such as the dimension, size, quantity, configuration, or the like, of different types of data information.

The environment characteristic of the first dataset may be used to indicate a characteristic related to the collection environment of the first dataset, a characteristic related to the usage environment of the first dataset, or the like.

Correspondingly, the first assistance information used to indicate the environment characteristic of the first dataset may include collection environment information of the first dataset. That is to say, the first device may associate the collection environment information of the first dataset with the first dataset to indicate the environment characteristic of the first dataset.

In the embodiments of the disclosure, the collection environment information of the first dataset may be used to indicate whether there are obstructions in the collection region of the first dataset and an obstruction situation of obstructions. Exemplarily, the collection environment information of the first dataset may include a dense building region environment, an ordinary building region environment, a sparse building region environment, an unobstructed region environment, or the like.

The transmission-related characteristic of the first dataset may be used to indicate a related characteristic of the first dataset during the transmission process, which, for example, may include a characteristic related to the transmission configuration, a characteristic related to the transmission manner, or the like.

Correspondingly, the first assistance information used to indicate the transmission-related characteristic of the first dataset may include transmission configuration information of the first dataset. That is to say, the first device may associate the transmission configuration information of the first dataset with the first dataset to indicate the transmission-related characteristic of the first dataset.

The embodiments of the disclosure do not limit the specific content of the transmission configuration information of the first dataset. Exemplarily, the transmission configuration information of the first dataset may include one or more of: transmission antenna information associated with the first dataset, receiving antenna information associated with the first dataset, time-domain dimension information for transmitting the first dataset (e.g., a period, a time-domain position, or the like), frequency-domain dimension information for transmitting the first dataset (e.g., a bandwidth, a frequency-domain density, or the like), reference signal configuration associated with the first dataset, measurement configuration associated with the first dataset, or the like.

The temporal characteristic of the first dataset may include, for example, acquisition time information of the first dataset, update time information of the first dataset, or the like.

The above listed first assistance information may provide information beyond the first dataset itself, which is beneficial for data utilization. When the data user uses the data, the above first assistance information is conducive to training/construction/update of the wireless communication solution and construction of the scenario/configuration/region adaptation solution. For example, wireless communication models in different regions may be constructed based on different region information, wireless communication models of different cells may be constructed based on different cell information, and wireless communication models for speed settings in different usage scenarios may be constructed based on different speed information.

In some embodiments, the above first assistance information may be indicated by an assistance information ID. That is to say, the above first assistance information may be constructed in a form of the assistance information ID, and indicated or used in the wireless communication system.

Exemplarily, the assistance information ID may include one or more of: an ID related to the acquisition region/location, a cell-related ID, a beam-related ID, a speed ID, a data type ID, a transmission configuration ID, an environment information ID, a node information ID, or the like. These IDs are introduced in detail in the following.

Taking a case in which the assistance information ID includes the ID related to the acquisition region/location as an example, after the region to be served is divided into N different regions, different regions may correspond to different acquisition region IDs. For example, region i (i≤N) corresponds to acquisition region ID i.

In some embodiments, the ID related to the acquisition region/location may be identified by K1 bits or K1 numbers. For example, the region ID of region i may be identified by K1 bits or K1 numbers, as the assistance information ID of the first dataset collected within region i.

Taking a case in which the assistance information ID includes the cell-related ID or the beam-related ID as an example, when the first dataset is collected within a specific cell, the cell-related ID of the specific cell may be taken as the assistance information ID of the first dataset. Alternatively, when the first dataset is collected within a specific beam, the beam-related ID of the specific beam may be taken as the assistance information ID of the first dataset.

The embodiments of the disclosure do not specifically limit the representation manner of the cell-related ID. Exemplarily, the cell-related ID may include a cell ID. In some embodiments, the cell ID may include, for example, a Physical Cell Identifier (PCI) of the cell, a Cell Global Identifier (CGI) of the cell, or the like.

The embodiments of the disclosure do not specifically limit the representation manner of the beam-related ID. Exemplarily, the cell-related ID may include a beam ID, a beam reference signal ID, or the like.

In some embodiments, the cell-related ID or the beam-related ID may be identified by K2 bits or K2 numbers, as the assistance information ID of the first dataset associated with different cells or different beams.

Taking the speed ID as an example, a speed ID of the data collection node or the data usage node may be associated with the first dataset, and the speed ID is taken as the assistance information ID of the first dataset.

In some embodiments, the speed ID may refer to different speed level IDs, for example, different speed levels may be indicated by K-bit information. For example, 3-bit information may be used to indicate speed levels such as stationary, low-speed, medium-speed, high-speed, ultra-high-speed, or the like.

In some embodiments, the speed ID may refer to different speed magnitude IDs, for example, the speed ID may be identified by K3 bits or K3 numbers as the assistance information ID of the first dataset with different speed magnitude information.

Taking the data type ID as an example, different data types may be associated with different data type IDs. For example, data types such as the channel information H, the channel pre-coding information W, the reference signal information RS, the measurement information for a specific cell/beam, or the like, may be respectively associated with different data IDs.

In some embodiments, the data type ID may be identified by K4 bits or K4 numbers, as the assistance information ID of the first dataset with different data types.

Taking the transmission configuration ID as an example, the transmission configuration ID may be used to indicate different transmission configuration types, for example, different transmission configuration types formed by combinations of one or more of different transmission antenna information, receiving antenna information, time-domain dimension information (e.g., a period or a time-domain position), frequency-domain dimension information (e.g., a bandwidth or a frequency-domain density), RS configuration, measurement configuration, or the like.

In some embodiments, the transmission configuration ID may be identified by K5 bits or K5 numbers, as the assistance information ID of the first dataset with different transmission configuration types.

Taking the environment information ID as an example, the environment information ID may be used to indicate different environment types, for example, a dense building region environment, an ordinary building region environment, a sparse building region environment, an unobstructed region environment, or the like.

In some embodiments, the environment information ID may be identified by K6 bits or K6 numbers, as the assistance information ID of the first dataset with different environment information types.

Taking the node information ID as an example, the node information ID may be used to indicate different node identification information, for example, identification information of the terminal device, identification information of the base station, identification information of the core network element, or the like.

In some embodiments, the node information ID may be identified by K7 bits or K7 numbers. In some embodiments, the node information ID of different terminal devices, base stations, core network elements, or combinations of the above nodes may be taken as the assistance information ID of the first dataset.

By constructing the first assistance information in the form of the assistance information ID, the first assistance information may be labeled and complexity of identifying the first assistance information may be simplified.

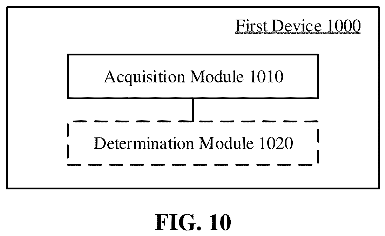

The method embodiments of the disclosure are described above in detail in combination with FIG. 1 to FIG. 9, and apparatus embodiments of the disclosure are described below in detail in combination with FIG. 10 to FIG. 12. It is to be understood that the description of the method embodiments corresponds to the description of the apparatus embodiments. Therefore, parts not described in detail may refer to the previous method embodiments.

FIG. 10 is a schematic diagram of a structure of a communication device provided by an embodiment of the disclosure. The communication device 1000 shown in FIG. 10 is the first device described in any one of the above embodiments. The communication device 1000 shown in FIG. 10 may include an acquisition module 1010.

The acquisition module 1010 may be configured to acquire first assistance information, and the first assistance information is used to indicate a characteristic of a first dataset.

Optionally, the characteristic of the first dataset includes one or more of: a spatial characteristic of the first dataset; a characteristic of a node associated with the first dataset; a type characteristic of the first dataset; an environment characteristic of the first dataset; a transmission-related characteristic of the first dataset; or a temporal characteristic of the first dataset.

Optionally, the first assistance information includes one or more of: acquisition region/position information of the first dataset; cell-related information of the first dataset; beam-related information of the first dataset; speed information of the node associated with the first dataset; type information of the first dataset; transmission configuration information of the first dataset; collection environment information of the first dataset; identity information of the node associated with the first dataset; acquisition time information of the first dataset; or configuration information of the node associated with the first dataset.

Optionally, the communication device 1000 may further include a determination module 1020. The determination module 1020 is configured to determine a region division manner associated with an acquisition region of the first dataset. The region division manner is determined by one or more of: being predefined by a protocol; being indicated to the first device by a network device; or being divided by the first device.

Optionally, the first assistance information is indicated using an assistance information identifier.

Optionally, the communication device may further include a sending module. The sending module is configured to send the first assistance information to a second device.

Optionally, the first device includes one or more of: a terminal device, a network device, or a third-party server; and/or, the second device includes one or more of: a terminal device, a network device, or a third-party server.

Optionally, the first assistance information and the first dataset are used to train a wireless communication model.

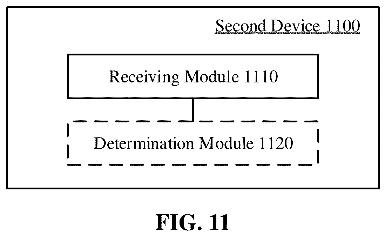

FIG. 11 is a schematic diagram of a structure of a communication device provided by another embodiment of the disclosure. The communication device 1100 shown in FIG. 11 is the second device described in any one of the above embodiments. The communication device 1100 shown in FIG. 11 may include a receiving module 1110.

The receiving module 1110 may be configured to receive first assistance information from a first device, and the first assistance information is used to indicate a characteristic of a first dataset.

Optionally, the characteristic of the first dataset includes one or more of: a spatial characteristic of the first dataset; a characteristic of a node associated with the first dataset; a type characteristic of the first dataset; an environment characteristic of the first dataset; a transmission-related characteristic of the first dataset; or a temporal characteristic of the first dataset.

Optionally, the first assistance information includes one or more of: acquisition region/position information of the first dataset; cell-related information of the first dataset; beam-related information of the first dataset; speed information of the node associated with the first dataset; type information of the first dataset; transmission configuration information of the first dataset; collection environment information of the first dataset; identity information of the node associated with the first dataset; acquisition time information of the first dataset; or configuration information of the node associated with the first dataset.

Optionally, the communication device 1100 may further include a determination module 1120. The determination module 1120 is configured to determine a region division manner associated with an acquisition region of the first dataset. The region division manner is determined by one or more of: being predefined by a protocol; being indicated to the second device by a network device; or being indicated to the second device by the first device.

Optionally, the first assistance information is indicated using an assistance information identifier.

Optionally, the first device includes one or more of: a terminal device, a network device, or a third-party server; and/or, the second device includes one or more of: a terminal device, a network device, or a third-party server.

Optionally, the first assistance information and the first dataset are used to train a wireless communication model.

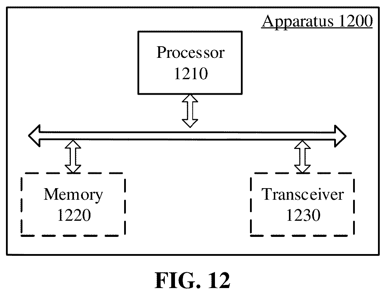

FIG. 12 is a schematic diagram of a structure of a communication apparatus of an embodiment of the disclosure. The dashed line in FIG. 12 indicates that the unit or module is optional. The apparatus 1200 may be used to implement the methods described in the above method embodiments. The apparatus 1200 may be a chip, a terminal device, or a network device.

The apparatus 1200 may include one or more processors 1210. The processor 1210 may support the apparatus 1200 to implement the methods described in the above method embodiments. The processor 1210 may be a general purpose processor or a dedicated processor. For example, the processor may be a Central Processing Unit (CPU). Alternatively, the processor may also be other general-purpose processors, a Digital Signal Processor (DSP), an Application-Specific Integrated Circuit (ASIC), a Field Programmable Gate Array (FPGA), or other programmable logic devices, discrete gates or transistor logic devices, discrete hardware components, or the like. The general purpose processor may be a microprocessor, or the processor may be any conventional processor, or the like.

The apparatus 1200 may further include one or more memories 1220. The memory 1220 has stored thereon a program that may be executed by the processor 1210 to enable the processor 1210 to perform the methods described in the above method embodiments. The memory 1220 may be independent of the processor 1210 or integrated into the processor 1210.

The apparatus 1200 may further include a transceiver 1230. The processor 1210 may communicate with other devices or chips through the transceiver 1230. For example, the processor 1210 may send and receive data with other devices or chips through the transceiver 1230.

An embodiment of the disclosure further provides a computer-readable storage medium for storing a program. The computer-readable storage medium may be applied to the terminal or network device provided by the embodiments of the disclosure, and the program enables a computer to perform the methods performed by the terminal or network device in various embodiments of the disclosure.

An embodiment of the disclosure further provides a computer program product. The computer program product includes a program. The computer program product may be applied to the terminal or network device provided by the embodiments of the disclosure, and the program enables a computer to perform the methods performed by the terminal or network device in various embodiments of the disclosure.

An embodiment of the disclosure further provides a computer program. The computer program may be applied to the terminal or network device provided by the embodiments of the disclosure, and the computer program enables a computer to perform the methods performed by the terminal or network device in various embodiments of the disclosure.

It is to be understood that the terms "system" and "network" may be used interchangeably in the disclosure. In addition, terms used in the disclosure are merely for explaining the specific embodiments of the disclosure and are not intended to limit the disclosure. Terms "first", "second", "third", "fourth", or the like in the description, the claims and the drawings of the disclosure are used to distinguish different objects rather than to describe a particular order. Furthermore, terms "include" and "have", and any variations thereof, are intended to cover non-exclusive inclusion.

The term "indicate" mentioned in the embodiments of the disclosure may be a direct indication, an indirect indication, or may represent an association relationship. For example, A indicating B may represent that A directly indicates B, e.g., B may be acquired through A; or that A indirectly indicates B, e.g., A indicates C, and B may be acquired through C; or that there is an association relationship between A and B.

In the embodiments of the disclosure, "B corresponding to A" indicates that B is associated with A, and B may be determined according to A. However, it is also to be understood that determining B according to A does not mean that B is merely determined according to A, and B may also be determined according to A and/or other information.

In the embodiments of the disclosure, the term "corresponding to" may represent that there is a direct correspondence or an indirect correspondence between two elements; or that there is an association relationship between the two elements; or a relationship in which one element indicates or is indicated by the other element, or one element configures or is configured by the other element, or the like.

In the embodiments of the disclosure, "pre-defined" or "pre-configured" may be implemented by pre-storing corresponding codes or tables in a device (e.g., including a terminal device and a network device), or other manners that may be used to indicate related information, the specific implementation of which is not limited by the disclosure. For example, the "pre-defined" may refer to being defined in a protocol.

In the embodiments of the disclosure, the "protocol" may refer to a standard protocol in the field of communication, which, for example, may include an LTE protocol, an NR protocol, or a related protocol applied to a future communication system, which is not limited by the disclosure.

The term "and/or" in the embodiments of the disclosure is only a description of an association relationship of associated objects, which represents that there may be three kinds of relationships. For example, A and/or B may represent three cases, i.e., independent existence of A, existence of both A and B, and independent existence of B. In addition, the character "/" herein usually represents that the previous and next associated objects are in an "or" relationship.

In various embodiments of the disclosure, numbers of the above processes do not imply an order of execution. The order of execution of the processes should be determined based on the functions and inherent logic, and should not construe any limitation on the implementation of the embodiments of the disclosure.

In several embodiments provided by the disclosure, it is to be understood that the disclosed systems, apparatuses and methods may be implemented in other manners. For example, the apparatus embodiments described above are only schematic. For example, division of the units is only a kind of logic function division, and other division manners may be adopted during a practical implementation. For example, multiple units or components may be combined or integrated into another system, or some characteristics may be neglected or not executed. In addition, coupling or direct coupling or communication connection between various displayed or discussed components may be indirect coupling or communication connection through some interfaces, apparatuses or units, and may be electrical, mechanical, or in other forms.

Units described as separate components may or may not be physically separated, and components displayed as units may or may not be physical units, that is, may be located in the same place, or may also be distributed to multiple network units. Part or all of the units may be selected according to practical requirements to implement the purpose of the solution of the embodiments.

In addition, various function units in various embodiments of the disclosure may be integrated into a processing unit, or each unit may physically exist independently, or two or more than two units may be integrated into a unit.

In the above embodiments, the processes may be fully or partially implemented by software, hardware, firmware, or any combination thereof. When implemented by software, the processes may be fully or partially implemented in the form of a computer program product. The computer program product includes one or more computer instructions. When the computer program instructions are loaded and executed on a computer, flows or functions in accordance with the embodiments of the disclosure are fully or partially generated. The computer may be a general purpose computer, a dedicated computer, a computer network, or other programmable apparatuses. The computer instructions may be stored in a computer-readable storage medium, or transmitted from a computer-readable storage medium to another. For example, the computer instructions may be transmitted from a website, a computer, a server, or a data center to another website, computer, server, or data center in a wired manner (e.g., a coaxial cable, an optical fiber, or a Digital Subscriber Line (DSL)) or a wireless manner (e.g., infrared, radio, microwave, or the like). The computer-readable storage medium may be any available medium that may be read by a computer, or a data storage device integrated from one or more available media, such as a server, a data center, or the like. The available medium may be a magnetic medium (e.g., a floppy disk, a hard disk, or a magnetic tape), an optical medium (e.g., a Digital Video Disc (DVD)), a semiconductor medium (e.g., a Solid State Disk (SSD)), or the like.

The above are only specific implementations of the disclosure, but the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A communication method, comprising:
acquiring, by a first device, first assistance information, wherein the first assistance information is used to indicate a characteristic of a first dataset.

2. The method of claim 1, wherein the characteristic of the first dataset comprises one or more of:
a spatial characteristic of the first dataset;
a characteristic of a node associated with the first dataset;
a type characteristic of the first dataset;
an environment characteristic of the first dataset;
a transmission-related characteristic of the first dataset; or
a temporal characteristic of the first dataset.

3. The method of claim 1 or 2, wherein the first assistance information comprises one or more of:
acquisition region/position information of the first dataset;
cell-related information of the first dataset;
beam-related information of the first dataset;
speed information of a node associated with the first dataset;
type information of the first dataset;
transmission configuration information of the first dataset;
collection environment information of the first dataset;
identity information of the node associated with the first dataset;
acquisition time information of the first dataset; or
configuration information of the node associated with the first dataset.

4. The method of claim 3, further comprising:
determining, by the first device, a region division manner associated with an acquisition region of the first dataset;
wherein the region division manner is determined by one or more of: being predefined by a protocol; being indicated to the first device by a network device; or being divided by the first device.

5. The method of any one of claims 1 to 4, wherein the first assistance information is indicated using an assistance information identifier.

6. The method of any one of claims 1 to 5, further comprising:
sending, by the first device, the first assistance information to a second device.

7. The method of claim 6, wherein
the first device comprises one or more of: a terminal device, a network device, or a third-party server; and/or
the second device comprises one or more of: a terminal device, a network device, or a third-party server.

8. The method of any one of claims 1 to 7, wherein the first assistance information and the first dataset are used to train a wireless communication model.

9. A communication method, comprising:
receiving, by a second device, first assistance information from a first device, wherein the first assistance information is used to indicate a characteristic of a first dataset.

10. The method of claim 9, wherein the characteristic of the first dataset comprises one or more of:
a spatial characteristic of the first dataset;
a characteristic of a node associated with the first dataset;
a type characteristic of the first dataset;
an environment characteristic of the first dataset;
a transmission-related characteristic of the first dataset; or
a temporal characteristic of the first dataset.

11. The method of claim 9 or 10, wherein the first assistance information comprises one or more of:
acquisition region/position information of the first dataset;
cell-related information of the first dataset;
beam-related information of the first dataset;
speed information of a node associated with the first dataset;
type information of the first dataset;
transmission configuration information of the first dataset;
collection environment information of the first dataset;
identity information of the node associated with the first dataset;
acquisition time information of the first dataset; or
configuration information of the node associated with the first dataset.

12. The method of claim 11, further comprising:
determining, by the second device, a region division manner associated with an acquisition region of the first dataset;
wherein the region division manner is determined by one or more of: being predefined by a protocol; being indicated to the second device by a network device; or being indicated to the second device by the first device.

13. The method of any one of claims 9 to 12, wherein the first assistance information is indicated using an assistance information identifier.

14. The method of any one of claims 9 to 13, wherein
the first device comprises one or more of: a terminal device, a network device, or a third-party server; and/or
the second device comprises one or more of: a terminal device, a network device, or a third-party server.

15. The method of any one of claims 9 to 14, wherein the first assistance information and the first dataset are used to train a wireless communication model.

16. A communication device, wherein the communication device is a first device, and the first device comprises:
an acquisition module, configured to acquire first assistance information, wherein the first assistance information is used to indicate a characteristic of a first dataset.

17. The communication device of claim 16, wherein the characteristic of the first dataset comprises one or more of:
a spatial characteristic of the first dataset;
a characteristic of a node associated with the first dataset;
a type characteristic of the first dataset;
an environment characteristic of the first dataset;
a transmission-related characteristic of the first dataset; or
a temporal characteristic of the first dataset.

18. The communication device of claim 16 or 17, wherein the first assistance information comprises one or more of:
acquisition region/position information of the first dataset;
cell-related information of the first dataset;
beam-related information of the first dataset;
speed information of a node associated with the first dataset;
type information of the first dataset;
transmission configuration information of the first dataset;
collection environment information of the first dataset;
identity information of the node associated with the first dataset;
acquisition time information of the first dataset; or
configuration information of the node associated with the first dataset.

19. The communication device of claim 18, further comprising:
a determination module, configured to determine a region division manner associated with an acquisition region of the first dataset;
wherein the region division manner is determined by one or more of: being predefined by a protocol; being indicated to the first device by a network device; or being divided by the first device.

20. The communication device of any one of claims 16 to 19, wherein the first assistance information is indicated using an assistance information identifier.

21. The communication device of any one of claims 16 to 20, further comprising:
a sending module, configured to send the first assistance information to a second device.

22. The communication device of claim 21, wherein
the first device comprises one or more of: a terminal device, a network device, or a third-party server; and/or
the second device comprises one or more of: a terminal device, a network device, or a third-party server.

23. The communication device of any one of claims 16 to 22, wherein the first assistance information and the first dataset are used to train a wireless communication model.

24. A communication device, wherein the communication device is a second device, and the second device comprises:
a receiving module, configured to receive first assistance information from a first device, wherein the first assistance information is used to indicate a characteristic of a first dataset.

25. The communication device of claim 24, wherein the characteristic of the first dataset comprises one or more of:
a spatial characteristic of the first dataset;
a characteristic of a node associated with the first dataset;
a type characteristic of the first dataset;
an environment characteristic of the first dataset;
a transmission-related characteristic of the first dataset; or
a temporal characteristic of the first dataset.

26. The communication device of claim 24 or 25, wherein the first assistance information comprises one or more of:
acquisition region/position information of the first dataset;
cell-related information of the first dataset;
beam-related information of the first dataset;
speed information of a node associated with the first dataset;
type information of the first dataset;
transmission configuration information of the first dataset;
collection environment information of the first dataset;
identity information of the node associated with the first dataset;
acquisition time information of the first dataset; or
configuration information of the node associated with the first dataset.

27. The communication device of claim 26, further comprising:
a determination module, configured to determine a region division manner associated with an acquisition region of the first dataset;
wherein the region division manner is determined by one or more of: being predefined by a protocol; being indicated to the second device by a network device; or being indicated to the second device by the first device.

28. The communication device of any one of claims 24 to 27, wherein the first assistance information is indicated using an assistance information identifier.

29. The communication device of any one of claims 24 to 28, wherein
the first device comprises one or more of: a terminal device, a network device, or a third-party server; and/or
the second device comprises one or more of: a terminal device, a network device, or a third-party server.

30. The communication device of any one of claims 24 to 29, wherein the first assistance information and the first dataset are used to train a wireless communication model.

31. A communication device comprising a memory, a processor and a transceiver, wherein the memory is configured to store a program, and the processor is configured to call the program from the memory and control the transceiver to receive or send signals to enable the communication device to perform the method of any one of claims 1 to 8 or any one of claims 9 to 15.

32. An apparatus comprising a processor configured to call a program from a memory to enable the apparatus to perform the method of any one of claims 1 to 8 or any one of claims 9 to 15.

33. A chip comprising a processor configured to call a program from a memory to enable a device having installed thereon the chip to perform the method of any one of claims 1 to 8 or any one of claims 9 to 15.

34. A computer-readable storage medium having stored thereon a program that enables a computer to perform the method of any one of claims 1 to 8 or any one of claims 9 to 15.

35. A computer program product comprising a program that enables a computer to perform the method of any one of claims 1 to 8 or any one of claims 9 to 15.

36. A computer program enabling a computer to perform the method of any one of claims 1 to 8 or any one of claims 9 to 15.
